# EUROPÄISCHE PATENTSCHRIFT

(11) **EP 4 350 930 B1**
(45) Veröffentlichungstag und Bekanntmachung des Hinweises auf die Patenterteilung: **02.12.2026**
(21) Anmeldenummer: 22200131.5
(22) Anmeldetag: 06.10.2022
(51) Int. Cl.: H02J 7/00, H02J 7/02

(54) **VORRICHTUNG ZUM LADEN VON AKKUPACKS**
DEVICE FOR CHARGING BATTERY PACKS
DISPOSITIF DE CHARGEMENT DE BLOCS-BATTERIES

(43) Veröffentlichungstag der Anmeldung: 10.04.2024
(73) Patentinhaber: Andreas Stihl AG & Co. KG, 71336 Waiblingen (DE)
(72) Erfinder: HEINRICH, Thomas, 71397 Leutenbach (DE); SAUERTEIG, Daniel, 71394 Kernen im Remstal (DE); MATTHEIS, Leonard, 71336 Waiblingen (DE)
(74) Vertreter: Karzel, Philipp

(56) Entgegenhaltungen:
- GB-A- 2 242 794
- US-A- 5 122 722
- US-A1- 2019 020 204
- US-A1- 2022 209 561

## Beschreibung

Die Erfindung betrifft eine Vorrichtung zum Laden eines Akkupacks mit einem ersten Akkuschacht zur Aufnahme eines ersten Akkupacks und zumindest einem zweiten Akkuschacht zur Aufnahme eines weiteren Akkupacks.

Die Vorrichtung ist über ein Netzteil an ein Versorgungsnetz mit einer Netzspannung von zum Beispiel 230 V angeschlossen. Zwischen dem Netzteil und einem Akkuschacht ist zumindest ein Spannungsregler angeordnet, dessen Leistungsausgang mit einem Akkuschacht verbunden ist. Über den Leistungsausgang des Spannungsreglers sind dem Akkuschacht eine Ladespannung und ein Ladestrom zugeführt.

In der Praxis werden Akkupacks mit unterschiedlichen Leistungsdaten verwendet. So können einzelne Akkupacks Spannungen von zum Beispiel 12 V, 18 V oder 24 V zur Verfügung stellen. Derart unterschiedlich konfigurierte Akkupacks werden mit unterschiedlichen Ladeströmen aufgeladen. Eine Vorrichtung zum Laden eines Akkupacks muss daher die jeweils erforderlichen Ladeströme zur Verfügung stellen können. In einer Ladestation mit einem Ladestrom von zum Beispiel 24 A kann ein Akkupack mit einem maximal zulässigen Ladestrom von 12 A aber nicht ohne weiteres geladen werden.

Die US 2019/0020204 A1 beschreibt eine Geräteanordnung aus kaskadenartig zusammengefügten Ladegeräten. Aus der GB 2 242 794 A ist eine Ladeschaltung bekannt, die eine Schnellladung wie eine Erhaltungsladung angeschlossener Akkus ermöglicht. Die US 5,122,722 A und US 2022/0209561 A1 beschreiben Ladeverfahren zum sicheren Laden eines aus mehreren Einzelzellen aufgebauten Akkupacks.

Der Erfindung liegt die Aufgabe zugrunde, eine im Aufbau einfache Vorrichtung zum Laden von Akkupacks anzugeben, mit der Akkupacks unterschiedlicher Kapazität und/oder mit unterschiedlichen Ladeströmen in ein und demselben Akkuschacht geladen werden können.

Die Aufgabe wird dadurch gelöst, dass zwischen dem Netzteil und dem Akkuschacht ein erster Spannungsregler mit einem ersten Leistungsausgang für einen ersten maximalen Ladestrom und zwischen dem Netzteil und dem Akkuschacht zumindest ein zweiter Spannungsregler mit einem zweiten Leistungsausgang für einen zweiten maximalen Ladestrom vorgesehen ist. Die Leistungsausgänge der Spannungsregler sind über eine Schaltvorrichtung mit den Akkuschächten verbunden. Nach der Erfindung ist die Schaltvorrichtung derart ausgebildet, dass sie wahlweise den Leistungsausgang eines Spannungsreglers auf nur einen Akkuschacht geschaltet oder aber beide Leistungsausgänge beider Spannungsregler mit nur einem Akkuschacht verbindet.

Leistet ein Leistungsausgang eines Spannungsreglers einen maximalen Ladestrom von z.B. I₁ und der Leistungsausgang eines weiteren Spannungsreglers einen maximalen Ladestrom von z.B. I₂, so kann über die Schaltvorrichtung einem jeweiligen Akkuschacht ein Ladestrom I₁ oder ein Ladestrom I₂ zugeführt werden. Über die Schaltvorrichtung ist es aber auch möglich, die Leistungsausgänge beider Spannungsregler auf nur einen Akkuschacht zu schalten, sodass dann an dem einen Akkuschacht ein maximaler Ladestrom von I₁ plus I₂ zur Verfügung steht. In ein und demselben Akkuschacht kann somit ein Akkupacks mit einem maximalen Ladestrom von zum Beispiel 12 A geladen werden oder aber ein Akkupack mit einem höheren Ladestrom von zum Beispiel 24 A.

Um die Leistungsausgänge der Spannungsregler wie beschrieben schalten zu können, ist vorgesehen, dass die Schaltvorrichtung mehrere Schaltelemente aufweist. So kann die Schaltvorrichtung ein erstes Schaltelement umfassen, das den Leistungsausgang des ersten Spannungsreglers mit z. B. dem ersten Akkuschacht verbindet. Die Schaltvorrichtung kann weiter ein zweites Schaltelement umfassen, das den Leistungsausgang des zweiten Spannungsreglers z.B. mit dem zweiten Akkuschacht verbindet. Über ein drittes Schaltelement der Schaltvorrichtung kann der Leistungsausgang des ersten Spannungsreglers und der Leistungsausgang des zweiten Spannungsreglers miteinander verbunden werden, wodurch ein gemeinsames Aufschalten der Leistungsausgänge beider Spannungsregler auf nur einen Akkuschacht möglich ist, z.B. der ersten oder den zweiten Akkuschacht.

In Weiterbildung der Erfindung ist die Schaltvorrichtung mit einer Steuereinheit verbunden. Die Steuereinheit ist ausgebildet, die Schaltelemente der Schaltvorrichtung zu betätigen. Hierzu verarbeitet die Steuereinheit vorteilhaft Informationen, die von einem Benutzer z.B. mittels Taster eingegeben werden. In besonderer Weiterbildung der Erfindung ist die Steuereinheit über eine Kommunikationsverbindung mit den Akkuschächten der Vorrichtung verbunden. Die Kommunikationsverbindung ist derart ausgebildet, dass sie die Kenndaten eines in einen Akkuschacht eingeschobenen Akkupacks der Steuereinheit übermittelt. Dadurch wird der Benutzer davon entlastet, der Vorrichtung mitteilen zu müssen, welcher Typ eines Akkupacks eingeschoben wurde. Die Steuereinheit verarbeitet die über die Kommunikationsverbindung übermittelten Daten des eingeschobenen Akkupacks und erkennt, ob dieser mit einfachem Ladestrom oder mit erhöhtem Ladestrom geladen werden kann. Kann der Akkupack mit nur einfachem Ladestrom geladen werden, so steuert die Steuereinheit die Schaltvorrichtung derart an, dass der Akkuschacht mit dem Akkupack mit nur einem Leistungsausgang eines Spannungsreglers verbunden wird. Erkennt die Steuereinheit hingegen, dass der eingeschobenen Akkupacks mit einem erhöhten Ladestrom geladen werden kann, werden die Schalter der Schaltvorrichtung derart betätigt, dass zwei Leistungsausgänge der Spannungsregler zusammen auf den Akkuschacht mit dem Akkupack aufgeschaltet werden. Der Benutzer muss also lediglich den Akkupacks in den Akkuschacht einschieben, worauf die Vorrichtung anhand der Daten des Akkupacks selbständig einen zulässigen maximalen Ladestrom durch Aufschalten nur eines Leistungsausgangs eines Spannungsreglers oder durch Aufschalten beider Leistungsausgänge beider Spannungsregler auf den Akkuschacht einstellt.

Die Vorrichtung zum Laden eines Akkupacks kann zwei, drei, vier oder weitere Akkuschächte umfassen. Die Ausbildung der Vorrichtung ist erfindungsgemäß derart vorgesehen, dass jedem Akkuschacht ein Spannungsregler zugeordnet ist. Dieser Spannungsregler ist mit dem zugeordneten Akkuschacht über je ein Schaltelement der Schaltvorrichtung verbunden. Sind zum Beispiel vier Akkuschächte vorgesehen, umfasst die Vorrichtung vier Spannungsregler. Nach der Erfindung ist nun vorgesehen, dass die Leistungsausgänge von zumindest zwei Spannungsreglern über ein weiteres Schaltelement der Schaltvorrichtung miteinander verbunden sind. Dadurch ist gewährleistet, dass zumindest einem der vier Akkuschächte zwei Leistungsausgänge der Spannungsregler aufgeschaltet werden können. Zumindest dieser eine Akkuschacht kann dann - von der Schaltvorrichtung gesteuert - mit dem maximalen Ladestrom eines Spannungsreglers oder mit der Summe der maximalen Ladeströme von zwei Spannungsreglern betrieben werden.

Um den Aufbau der Vorrichtung zum Laden eines Akkupacks einfach zu halten ist vorgesehen, dass die Spannungsregler der Vorrichtung gleich ausgebildet sind. Die in der Vorrichtung vorgesehenen Spannungsregler weisen insbesondere gleiche maximale Ladeströme auf. Auf diese Weise kann ein Akkuschacht mit dem insbesondere ganzzahligen Vielfachen eines maximalen Ladestroms betrieben werden. So ist es grundsätzlich möglich und im Rahmen der Erfindung liegend, wenn die Schaltvorrichtung derart ausgebildet ist, dass auch drei oder vier Leistungsausgänge auf nur einen Akkuschacht geschaltet werden können.

Mehrere Spannungsregler, die insbesondere als Tiefsetzsteller ausgebildet sind, liegen in elektrisch parallel zueinander verlaufenden Leitungszweigen. Die Spannungsregler werden zweckmäßig gemeinsam aus einem oder mehreren Netzteilen eingangsseitig gespeist und sind ausgangsseitig über die Schaltvorrichtung mit den Akkuschächten verbunden.

Weitere Merkmale der Erfindung ergeben sich aus den weiteren Ansprüchen, der Beschreibung und der Zeichnung. Die in den Ansprüchen angegebenen Merkmale sowie die in der Beschreibung aufgeführten Merkmale und die in der Zeichnung dargestellten Merkmale sind im Rahmen der Erfindung untereinander kombinierbar. Die Zeichnungen zeigen:
- Fig. 1: ein schematisches Blockschaltbild einer Vorrichtung zum Laden von Akkupacks mit zwei Akkuschächten und einer Schaltvorrichtung zwischen den Leistungsausgang der Spannungsregler und den Akkuschächten,
- Fig. 2: ein schematisches Blockschaltbild entsprechend der Darstellung nach Fig. 1 mit einer alternativ ausgebildeten Schaltvorrichtung,
- Fig. 3: ein weiteres schematisches Blockschaltbild entsprechend der Darstellung in Fig. 1 mit geändert ausgeführter Schaltvorrichtung,
- Fig. 4: ein schematisches Blockschaltbild einer Vorrichtung mit zwei Akkuschächten und einer alternativen Schaltvorrichtung,
- Fig. 5: ein schematisches Blockschaltbild einer Vorrichtung mit drei Akkuschächten und drei Spannungsreglern und einer Schaltvorrichtung mit Schaltelementen in einer ersten möglichen Schaltstellung,
- Fig. 6: ein schematisches Blockschaltbild nach Fig. 5 mit einer zweiten möglichen Schaltstellung der Schaltelemente der Schaltvorrichtung,
- Fig. 7: ein schematisches Blockschaltbild nach Fig. 5 mit einer dritten möglichen Schaltstellung der Schaltelemente der Schaltvorrichtung,
- Fig. 8: ein schematisches Blockschaltbild einer Vorrichtung mit vier Akkuschächten und vier Spannungsreglern und einer Schaltvorrichtung mit Schaltelementen in einer ersten möglichen Schaltstellung,
- Fig. 9: ein schematisches Blockschaltbild nach Fig. 8 mit einer zweiten möglichen Schaltstellung der Schaltelemente der Schaltvorrichtung,
- Fig. 10: ein schematisches Blockschaltbild nach Fig. 8 mit einer dritten möglichen Schaltstellung der Schaltelemente der Schaltvorrichtung,
- Fig. 11: ein schematisches Blockschaltbild nach Fig. 8 mit einer vierten möglichen Schaltstellung der Schaltelemente der Schaltvorrichtung.

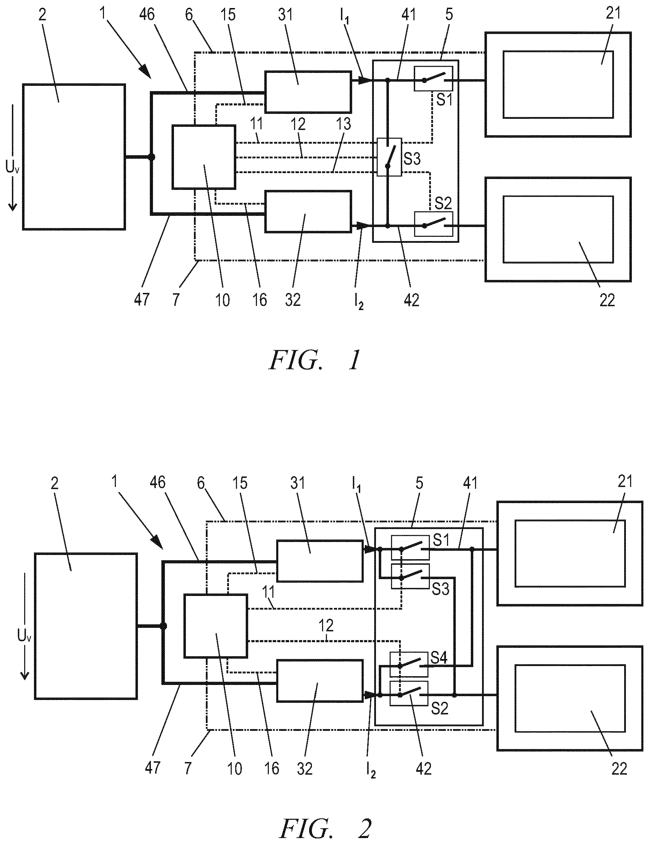

In Fig. 1 ist eine erfindungsgemäße Vorrichtung 1 zum Laden von Akkupacks dargestellt. Die Vorrichtung 1 weist einen ersten Akkuschacht 21 und einen zweiten Akkuschacht 22 auf. In einen Akkuschacht 21, 22 wird ein nicht dargestellter Akkupack eingeschoben, der von der Vorrichtung 1 zu laden ist. In einen Akkuschacht 21, 22 können unterschiedliche Typen von Akkupacks eingeschoben werden, zum Beispiel Akkupacks mit einer Ladeleistung von 12 A, von 24 A, von 36 A oder dergleichen.

Die Vorrichtung 1 ist über ein Netzteil 2 an eine Versorgungsspannung U_{V} angeschlossen. Die Versorgungsspannung U_{V} kann ein öffentliches Stromnetz mit einer Netzspannung von zum Beispiel 230 V oder auch 400 V sein.

Zwischen dem Netzteil 2 und einem Akkuschacht 21, 22 sind Spannungsregler 31, 32 vorgesehen, die eingangsseitig an dem Netzteil 2 angeschlossen ist. Der Leistungsausgang 41 des Spannungsreglers 31 ist über ein erstes Schaltelement S1 mit elektrischen Ladekontakten im Akkuschacht 21 verbunden. Entsprechend ist der Leistungsausgang 42 des Spannungsreglers 32 über ein zweites Schaltelement S2 mit elektrischen Ladekontakten im Akkuschacht 22 elektrisch verbunden.

Die Spannungsregler 31 und 32 liegen in elektrisch parallel zueinander liegenden Leitungszweigen 41 und 42.

Über ein drittes Schaltelement S3 ist der erste Leistungsausgang 41 des ersten Spannungsreglers 31 und der zweite Leistungsausgang 42 des zweiten Spannungsreglers 32 miteinander verbunden. Die Verbindung der Leistungsausgänge 41 und 42 über das dritte Schaltelement S3 liegt zwischen dem Leitungszweig des Leistungsausgangs 41 vom Spannungsregler 31 zum ersten Schaltelement S1 und dem Leistungszweig des Leistungsausgangs 42 vom Spannungsregler 32 zum zweiten Schaltelement S2. In Richtung eines zum Akkuschacht 21, 22 fließenden Ladestroms I₁ bzw. I₂ liegt die Verbindung der Leistungsausgänge 41 und 42 über das dritte Schaltelement S3 vor den Schaltelementen S1 und S2.

Die Spannungsregler 31 und 32 sind vorzugsweise gleich ausgebildet. Insbesondere sind die Spannungsregler 31 und 32 Tiefsetzsteller.

Im Ausführungsbeispiel nach Fig. 1 bilden die Schaltelemente S1, S2 und S3 eine Schaltvorrichtung 5. Die Schaltelemente S1, S2 und S3 der Schaltvorrichtung 5 werden von einer Steuereinheit 10 gesteuert. Hierzu ist die Steuereinheit 10 über Steuerleitungen 11, 12, 13 mit den einzelnen Schaltelementen S1, S2 und S3 verbunden.

Bei geschlossenem Schaltelement S1 führt der erste Spannungsregler 31 über seinen Leistungsausgang 41 dem Akkuschacht 21 einen ersten, insbesondere maximalen Ladestrom I₁ zu. Stellt der Spannungsregler 31 einen Ladestrom von zum Beispiel 12 A zur Verfügung, wird ein in den Akkuschacht 21 eingeschobener Akkupack mit 12 A geladen.

Bei geschlossenem Schaltelement S2 führt der zweite Spannungsregler 32 über seinen Leistungsausgang 42 dem Akkuschacht 22 einen zweiten, insbesondere maximalen Ladestrom I₂ zu. Stellt der Spannungsregler 32 einen Ladestrom von zum Beispiel 12 A zur Verfügung, wird ein in den Akkuschacht 22 eingeschobener Akkupack mit 12 A geladen.

Über das dritte Schaltelement S3 besteht die Möglichkeit, die Leistungsausgänge 41 und 42 der Spannungsregler 31 und 32 miteinander zu verbinden und nur einem Akkuschacht 21 bzw. 22 zuzuführen. Ist zum Beispiel das Schaltelement S1 und das Schaltelement S3 geschlossen, wird dem Akkuschacht 21 ein in der Summe ein Ladestrom zugeführt, der sich aus dem Ladestrom I₁ des Spannungsreglers 31 und dem Ladestrom I₂ des Spannungsreglers 32 zusammensetzt. Ein in den Akkuschacht 21 eingeschobener Akkupack kann mit erhöhtem Ladestrom I₁ + I₂ geladen werden, beispielsweise zweimal 12 A, also 24 A.

Die Steuereinheit 10 steht mit jedem Akkuschacht 21 bzw. 22 über eine Kommunikationsverbindung 6 bzw. 7 in datenübertragender Verbindung. Die Kommunikationsverbindung 6 bzw. 7 ist derart ausgelegt, dass nach Einschieben eines Akkupacks in einen Akkuschacht 21 bzw. 22 eine Verbindung mit der Kommunikationsverbindung 6 bzw. 7 hergestellt wird und die Kenndaten des Akkupacks der Steuereinheit 10 übermittelt werden. Kenndaten können die Nennspannung des Akkupacks, seine Kapazität, seine Temperatur, sein chemischer Aufbau, sein maximaler Ladestrom oder dgl. sein. Die Steuereinheit 10 kann durch Auswertung der Kenndaten feststellen, ob ein zum Beispiel in den Akkuschacht 21 eingeschobener Akkupack mit einfachem Ladestrom I₁ geladen werden kann oder mit einem erhöhten Ladestrom I₁ + I₂.

Kann der in den Akkuschacht 21 eingeschobene Akkupack nur mit einem maximalen Ladestrom I₁ geladen werden, wird ausschließlich das Schaltelement S1 geschlossen.

Stellt die Steuereinheit 10 fest, dass der in den Akkuschacht 21 eingeschobene Akkupack mit eine höheren Ladeleistung geladen werden darf, wird das Schaltelement S1 und S3 geschlossen, sodass die Leistungsausgänge 41 und 42 der Spannungsregler 31 und 32 zusammengeschaltet und über den Schalter S1 der erhöhte Ladestrom I₁ + I₂ dem Akkupack im Akkuschacht 21 zufließt. Das Schaltelement S2 des anderen Akkuschachtes 22 ist offen. Während der Ladezeit des Akkupacks in dem ersten Akkuschacht 21 mit erhöhtem Ladestrom I₁ + I₂ ist der Akkuschacht 22 von den Leistungsausgängen 41, 42 getrennt. Der Akkuschacht 22 steht zum Aufladen eines Akkupacks nicht zur Verfügung.

Es kann zweckmäßig sein, die Steuereinheit 10 über Steuerleitungen 15 und 16 mit Steuereingängen der Spannungsregler 31 und 32 zu verbinden. Die Steuereinheit 10 kann so in Abhängigkeit der über die Kommunikationsverbindung 6 bzw. 7 zufließenden Daten eine Anpassung des Ladestroms I₁, I₂ und/oder der Ladespannung vornehmen.

Ohne Eingriff durch den Benutzer kann ein in einen Akkuschacht 21, 22 eingeschobener Akkupack mit einem von der Vorrichtung zur Verfügung gestellten maximalen Ladestrom geladen werden, sodass sich die Ladezeit eines Akkupacks signifikant verkürzt. Die Steuereinheit 10 der Vorrichtung 1 erkennt selbstständig, welche Leistungsklasse der eingeschobene Akkupack hat, und führt dem Akkuschacht über eine Betätigung der Schaltelemente S1, S2 und S3 der Schaltvorrichtung 5 einen maximal zulässigen Ladestrom zu. Dieser zulässige maximale Ladestrom kann von einem Spannungsregler 31, von zwei Spannungsreglern 31 und 32 oder auch von mehr Spannungsregler bereitgestellt werden.

Die vorzugsweise als Tiefsetzsteller ausgebildeten Spannungsregler 31 und 32 sind vorteilhaft gleich ausgebildet. Jeder Spannungsregler 31 bzw. 32 weist insbesondere einen gleichen maximalen Ladestrom auf. Durch die Schaltvorrichtung 5 kann einem Akkuschacht 21 oder 22 ein ganzzahliges Vielfach des maximalen Ladestroms eines Spannungsreglers 31, 32 aufgeschaltet werden.

Im Ausführungsbeispiel nach Fig. 2 sind zwei Akkuschächte und zwei Spannungsregler vorgesehen, sodass auf einen Akkuschacht der doppelte maximale Ladestrom aufgeschaltet werden kann.

Im Ausführungsbeispiel nach Fig. 1 besteht die Schaltvorrichtung aus drei Schaltelementen S1, S2 und S3, wobei der Schalter S3 in Flussrichtung des Ladestroms I₁ bzw. I₂ vor den Schaltern S1 und S2 angeordnet ist. Im Ausführungsbeispiel nach Fig. 2 sind an jedem Leistungsausgang 41, 42 zwei Schaltelemente S1/S3 bzw. zwei Schaltelemente S2/S4 vorgesehen. Die Schaltelemente S1 und S3 verbindenden den Leistungsausgang 41 des ersten Spannungsreglers 32mit je einem Akkuschacht 21, 22. Die Schalter S2 und S4 verbinden den Leistungsausgang 42 des zweiten Spannungsreglers 32 jeweils mit dem Akkuschacht 22 bzw. 21. Die Schalter S3 und S4 dienen dabei der Verbindung der Leistungsausgänge 41 und 42 untereinander.

In Fig. 2 ist eine erfindungsgemäße Vorrichtung dargestellt, deren Schaltvorrichtung 5 einen im Vergleich zu Fig. 1 geänderten Aufbau aufweist. Die Ausführungsbeispiele nach Fig. 1 und Fig. 2 entsprechen sich im Aufbau; für gleiche Teile sind gleiche Bezugszeichen verwendet. Die Schaltvorrichtung 5 in Fig. 2 besteht aus vier Schaltelementen S1, S2, S3 und S4, die entsprechend der Beschreibung zu Fig. 1 von der Steuereinheit 10 in Abhängigkeit der Kenndaten eines in einen Aufnahmeschacht 21 bzw. 22 eingeschobenen Akkupacks betätigt werden. Wird in den Akkuschacht 21 ein Akkupack mit niedriger Ladeleistung eingeschoben, wird die Steuereinheit 10 lediglich den Schalter S1 schließen, sodass dem Akkuschacht 21 ein einfacher Ladestrom I₁ zufließt. Parallel zu einem Ladevorgang im Akkuschacht 21 kann im Akkuschacht 22 ein Akkupack geladen werden, dem nach Schließen des Schalters S2 ein einfacher Ladestrom I₂ des Spannungsreglers 32 zufließt.

Wird in einen Akkuschacht 21 oder 22 ein Akkupack höherer Kapazität eingeschoben, der mit einem höheren Ladestrom geladen werden kann, wird dies der Steuereinheit 10 durch Auslesen der Kenndaten des Akkupacks über die Kommunikationsverbindung 6 bzw. 7 übermittelt. Ist der Akkupack mit der möglichen höheren Ladeleistung in Akkuschacht 21 eingeschoben, wird die Steuereinheit 10 die Schalter S1 und S4 schließen. Dem Akkuschacht 21 fließt ein Ladestrom I₁ + I₂ zu. Die Schaltelemente S2 und S3 sind offen; der Akkuschacht 22 steht zum Laden nicht zur Verfügung.

Ist hingegen in den Akkuschacht 22 ein Akkupack mit möglicher höherer Ladeleistung eingeschoben, wird die Steuereinheit 10 die Schalter S1 und S4 offenhalten und die Schalter S2 und S3 schließen, sodass dem Akkuschacht 22 ein erhöhter Ladestrom I₁ + I₂ zufließt. Die Schaltelemente S1 und S4 sind offen; der Akkuschacht 21 steht zum Laden nicht zur Verfügung.

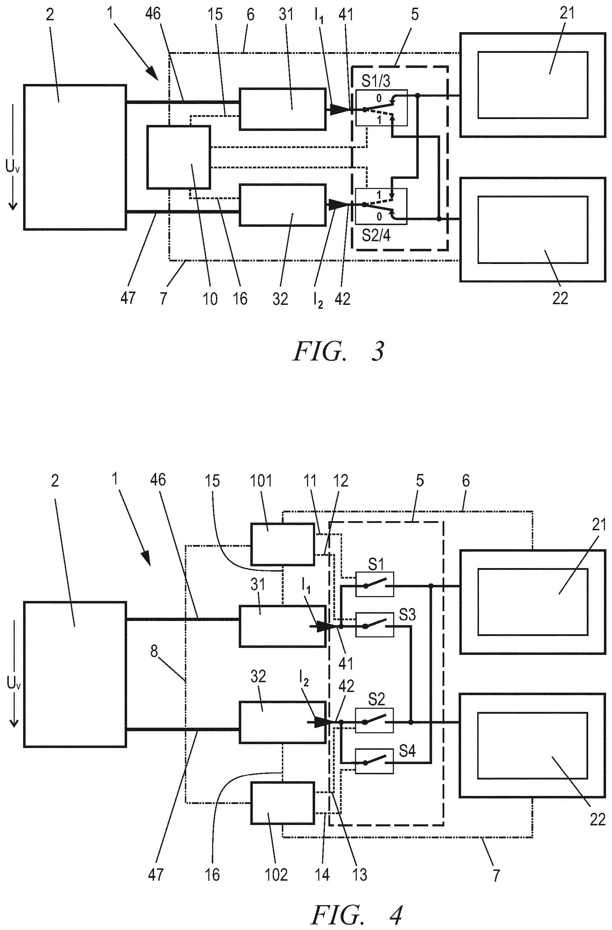

In Fig. 3 ist eine erfindungsgemäße Vorrichtung dargestellt, deren Schaltvorrichtung 5 einen im Vergleich zu Fig. 1 und 2 geänderten Aufbau aufweist. Die Ausführungsbeispiele nach den Fig. 1 bis 3 entsprechen sich im Aufbau; für gleiche Teile sind gleiche Bezugszeichen verwendet.

Im Ausführungsbeispiel nach Fig. 3 besteht die Schaltvorrichtung 5 aus zwei Schaltelementen, die als Umschalter S1/3 und S2/4 ausgebildet sind. Der Umschalter S1/3 entspricht den Schaltelementen S1 und S3 in Fig. 2 oder Fig. 1. Der Umschalter S2/4 entspricht den Schaltern S2 und S4 in Fig. 2. Die Steuerung der Umschalter S1/3 bzw. S2/4 erfolgt entsprechend der Funktionsbeschreibung zu den Fig. 1 und 2 über die Steuereinheit 10.

Dem Akkuschacht 21 und dem Akkuschacht 22 wird ein einfacher Ladestrom I₁ bzw. I₂ zugeführt, wenn die Umschalter 1/3 und 2/4 in der Stellung "0" stehen.

Steht der Umschalter 1/3 in der Stellung "1" und der Umschalter 2/4 in der Stellung "0", sind die beiden Leistungsausgänge 41 und 42 auf den Akkuschacht 22 geschaltet und dem Akkuschacht 22 fließt ein erhöhter Ladestrom I₁ + I₂ zu. Liegt hingegen der Umschalter 1/3 in Stellung "0" und der Umschalter 2/4 in Stellung "1", sind die beiden Leistungsausgänge 41 und 42 auf den Akkuschacht 21 geschaltet und dem Akkuschacht 21 fließt ein erhöhter Ladestrom I₁ + I₂ zu.

Das Ausführungsbeispiel nach Fig. 4 entspricht im grundsätzlichen Schaltungsaufbau dem Ausführungsbeispiel nach Fig. 2. Gleiche Teile sind mit gleichen Bezugszeichen versehen.

Während in Fig. 2 eine zentrale Steuereinheit 10 zur Schaltung der Schaltelemente S1, S2, S3, vorgesehen ist, ist im Ausführungsbeispiel nach Fig. 4 jedem Spannungsregler 31 bzw. 32 ein Mikroprozessor als Steuereinheit 101, 102 zugeordnet. Die Steuereinheit 101 steht über Steuerleitungen 11, 12 mit je ein Schaltelement S1 bzw. S3 und über eine Steuerleitung 15 mit dem zugeordneten Spannungsregler 31 in Verbindung. Die Steuereinheit 102 steht über die Steuerleitungen 13, 14 mit den Schaltelementen S2 und S4 und über eine Steuerleitung 16 mit dem zugeordneten Spannungsregler 32 in Verbindung.

Die Steuereinheit 101 steht über die Kommunikationsverbindung 6 mit dem Akkuschacht 21 und die Steuereinheit 102 über die Kommunikationsverbindung 7 mit dem Akkuschacht 22 in datenübertragender Verbindung. Über eine weitere Kommunikationsverbindung 8 stehen die Steuereinheiten 101 und 102 in datenübertragender Verbindung. Die Kommunikationsverbindungen 6, 7 und 8 können als Bus ausgebildet sein.

Die Funktion der Vorrichtung nach Fig. 4 entspricht denen nach den Fig. 1 bis 3 die Steuereinheiten 101 und 102 gleichen die über die Kommunikationsverbindung 6 und 7 empfangenen Daten von in einen Akkuschacht eingeschobenen Akkupack untereinander ab, um dann gemeinsam die Steuerung der Schaltelemente S1, S3, S2, S4 auszuführen. Entsprechend der Ansteuerung der Schaltelemente S1, S3, S2, S4, wird jedem Akkuschacht 21 bzw. 22 ein niedriger Ladestrom I₁ oder I₂ oder einem einzigen Akkuschacht 21 oder 22 ein doppelter Ladestrom I₁ + I₂ zufließen.

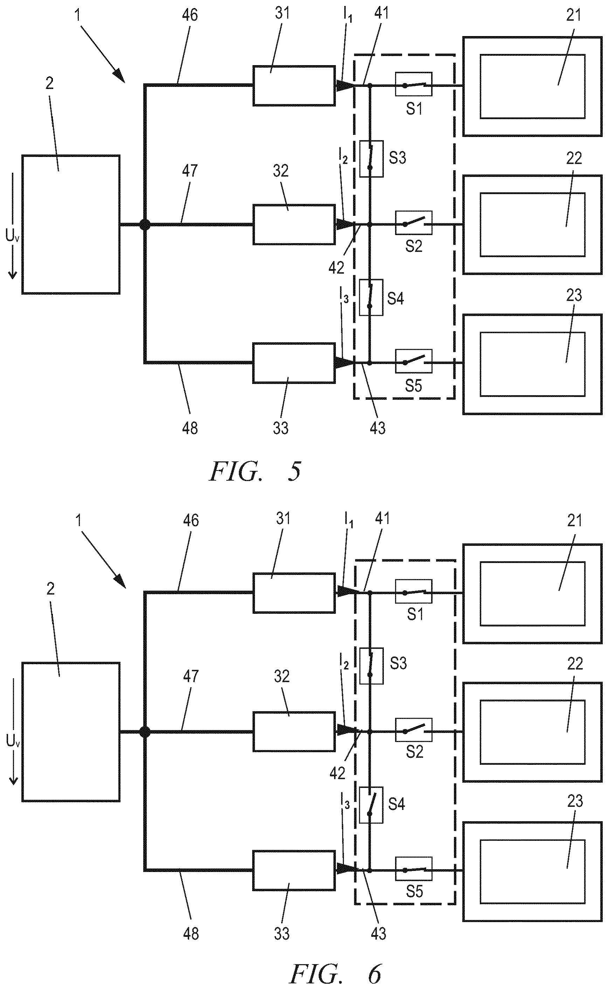

Die Ausführungsbeispiele nach den Fig. 5 bis 11 stellen eine vereinfachte Darstellung der erfindungsgemäßen Vorrichtung zum Laden von Akkupacks nach den Fig. 1 bis 4 dar. Gleiche Teile sind mit gleichen Bezugszeichen versehen. Die zu den Fig. 1 bis 4 gemachten Ausführungen zum Aufbau der Vorrichtung und zu deren Funktion gelten entsprechend für die Fig. 5 bis 11.

Die Fig. 5 bis 7 zeigen eine Vorrichtung 1 mit drei Akkuschächten 21, 22 und 23. Jeweils ein Akkuschacht 21, 22 und 23 ist mit jeweils einem Leistungsausgang 41, 42 und 43 eines Spannungsreglers 31, 32 und 33 verbunden. Jedem Akkuschacht 21, 22 und 23 ist somit jeweils ein Spannungsregler 31, 32 und 33 zugeordnet. Die Spannungsregler 31, 32 und 33 sind eingangsseitig an ein gemeinsames Netzteil 2 angeschlossen. Die Leistungsausgänge 41, 42 und 43 der Spannungsregler 31, 32 und 33 sind jeweils über Schaltelementen S1, S2 und S5 mit dem jeweils zugeordneten Akkuschacht 21, 22 und 23 verbunden. Über ein Schaltelement S3 sind die Leistungsausgänge 41 und 42 der Spannungsregler 31 und 32 miteinander verbunden. Über einen Schaltelement S4 sind die Leistungsausgänge 42 und 43 der Spannungsregler 32 und 33 miteinander verbunden. Die in Fig. 5 dargestellte Schaltvorrichtung 5 weist somit fünf Schaltelementen S1, S2, S 3, S4 und S5 auf. Die Steuerung der Schaltelemente S1, S2, S3, S4, und S5 erfolgt über eine Steuereinheit 10 bzw. 101 oder 102, wie sie in den vorhergehenden Ausführungsbeispielen der Fig. 1 bis 4 beschrieben sind.

In Fig. 5 sind die Schaltelementen S2 und S5 offen die Schaltelemente S1, S3 und S4 sind geschlossen. Die Ladeströme der Spannungsregler 31, 32 und 33 fließen gemeinsam über den Schalter S1 zum Akkuschacht 21. Dem Akkuschacht 21 fließt somit ein Ladestrom zu, der sich aus den Ladeströmen I₁, I₂ und I₃ zusammensetzt. Geht man von Spannungsreglern 31, 32 und 33 mit einem gleichen maximalen Ladestrom von zum Beispiel 12 A aus, so kann in dem Akkuschacht 21 ein Akkupack mit einem Ladestrom von 36 A geladen werden. Den Akkuschächten 22 und 23 fließt aufgrund der offenen Schaltelementen S2 und S5 kein Ladestrom zu.

In den Akkuschächten 22 und 23 kann in der Schaltstellung der Schaltvorrichtung nach Fig. 5 kein Akku geladen werden.

Das Ausführungsbeispiel nach Fig. 6 entspricht im Aufbau dem nach Fig. 5. Im Unterschied zur Fig. 5 haben die Schaltelemente S1, S2, S3, S4 und S5 der Schaltvorrichtung 5 andere Stellungen. Die Schaltelemente S1, S3 und S5 der Schaltvorrichtung 5 sind geschlossen und die Schaltelementen S2 und S6 offen. Dem Akkuschacht 21 fließt ein erhöhter Ladestrom von I₁ + I₂ zu. Dem Akkuschacht 23 fließt ein einfacher Ladestrom I₃ zu. Der Akkuschacht 22 ist aufgrund des offenen Schaltelementes S2 außer Betrieb. Geht man von vorzugsweise gleich ausgebildeten Spannungsreglern 31, 32 und 33 mit einem maximalen Ladestrom von z.B. 12 A aus, so würde der Akkuschacht 21 einen Ladestrom von 24 A und der Akkuschacht 23 einen Ladestrom von 12 A aufweisen.

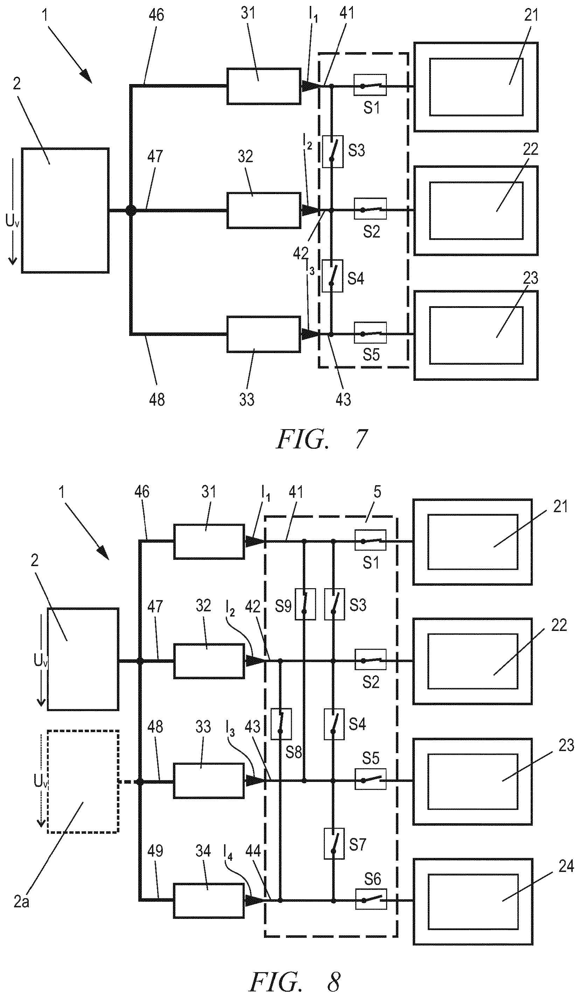

Fig. 7 zeigt einen Aufbau der erfindungsgemäßen Vorrichtung nach den Fig. 5 und 6 mit einer Schaltvorrichtung mit Schaltelementen S1, S2, S3, S4 und S5 in geänderten Schaltstellungen. So sind die die Leistungsausgänge 41, 42 und 43 miteinander verbindenden Schaltelemente S3 und S4 offen und die Schaltelemente S1, S2 und S5 geschlossen. Jeder Akkuschacht 21, 22 und 23 steht somit mit nur einem Leistungsausgang 41, 42 bzw. 43 in Verbindung. Dem Akkuschacht 21 fließt der Ladestrom I₁, dem Akkuschacht 22 der Ladestrom I₂ und dem Akkuschacht 23 der Ladestrom I₃ zu. Geht man von einem Spannungsregler31, 32, 33 mit einem maximalen Ladestrom von vorteilhaft 12 A aus, fließt jedem Akkuschacht 21, 22, 23 ein Ladestrom von 12 A zu. In allen drei Akkuschächten 21, 22, 23 kann gleichzeitig je ein Akkupack mit einem Ladestrom von maximal 12 A geladen werden.

Die Ausführungsbeispiele nach den Fig. 8 bis 11 zeigen eine erfindungsgemäße Vorrichtung 1 zum Laden eines Akkupacks mit vier Akkuschächten 21, 22, 23 und 24. Jeder Akkuschacht 21, 22, 23, 24 steht mit je einem Spannungsregler 31, 32, 33, 34 in Verbindung. Jedem Akkuschacht 21, 22, 23, 24 ist somit ein Spannungsregler 31, 32, 33, 34 zugeordnet. Die Leistungsausgänge 41, 42, 43, 44 der Spannungsregler 31, 32, 33, 34 sind über je ein Schaltelement S1, S2, S5, S6 mit je einem Akkuschacht 21, 22, 23, 24, verbunden.

Eingangsseitig sind die Spannungsregler 31,32, 33 und 34 über ein Netzteil 2 an ein Versorgungsnetz angeschlossen. Es kann zweckmäßig sein, eingangsseitig ein zweites Netzteil 2a vorzusehen, welches zum ersten Netzteil parallel auf der Eingangsseite der Spannungsregler 31, 32, 33 und 34 angeschlossen ist.

Darüber hinaus sind benachbarte Leistungsausgänge 41 und 42, 42 und 43 sowie 43 und 44 über je ein Schaltelementen S3, S4 und S7 miteinander verbunden. Über Schaltelemente S8 und S9 sind die jeweils übernächsten Leistungsausgänge miteinander verbunden. Im gezeigten Ausführungsbeispiel ist der Leistungsausgang 41 mit dem Leistungsausgang 43 über das Schaltelement S9 und der Leistungsausgang 42 mit dem Leistungsausgang 44 über das Schaltelement S8 verbunden.

Die Schaltvorrichtung 5 besteht somit aus neun Schaltelementen S1, S2, S3, S4, S5, S6, S7, S8 und S9. Die Steuerung der Schaltelemente S1, S2, S3, S4, S5, S6, S7, S8 und S9der Schaltvorrichtung 5 erfolgt über eine Steuereinheit10 bzw. 101, 102, wie sie zu den Fig. 1 bis Fig. 4 beschrieben ist.

In Fig. 8 sind die Schaltelemente S1, S2, S8 und S9 geschlossen. Die Schaltelemente S3, S4, S5, S6 und S7 sind offen. Dem Akkuschacht 21 fließen über die geschlossenen Schaltelemente S1 und S9 die Ladeströme I₁ und I₃ der Leistungsausgänge 41 und 43 zu. Dem Akkuschacht 22 fließen über die geschlossenen Schalter S2 und S8 die Ladeströme I₂ und I₄ der Leistungsausgänge 42 und 44 zu. Geht man von einem Spannungsregler 31, 32, 33, 34 mit einem gleichen maximalen Ladestrom von vorteilhaft 12 A aus, fließen dem Akkuschacht 21 und dem Akkuschacht 22 jeweils ein Ladestrom von 24 A zu.

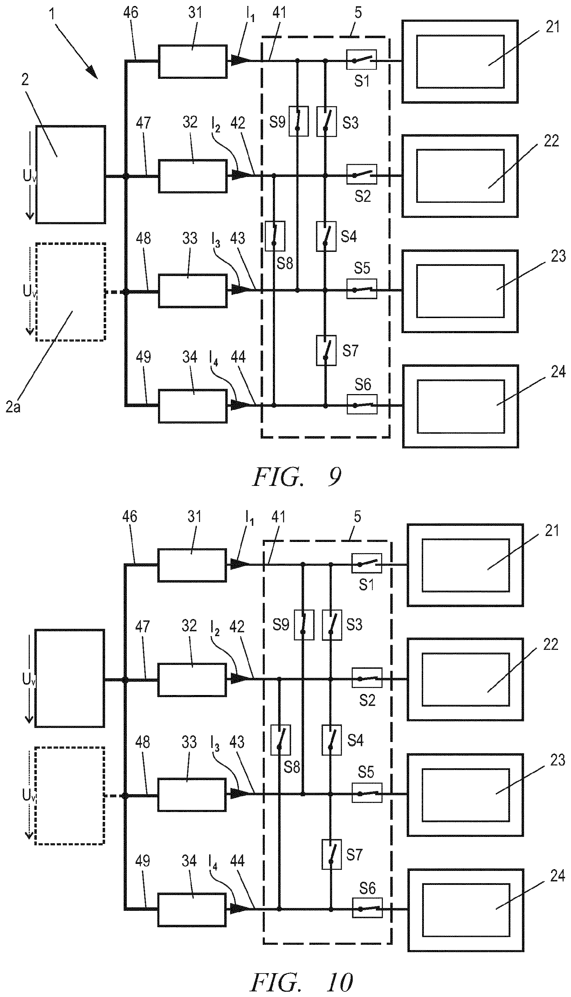

Der Aufbau der Vorrichtung nach Fig. 9 entspricht dem Aufbau der Vorrichtung nach Fig. 8. In Fig. 9 haben die Schaltelemente S1, S2, S3, S4, S5, S6, S7, S8 und S9 der Schaltvorrichtung 5 andere Schaltstellungen. Die Schaltelemente S5, S6, S8 und S9 sind geschlossen. Die Schaltelemente S1, S2, S3, S4 und S7 sind offen. Dem Akkuschacht 23 fließen über die geschlossenen Schalter S5 und S9 die Ladeströme I₁ und I₃ der Leistungsausgänge 41 und 43 zu. Dem Akkuschacht 24 fließen über die geschlossenen Schaltelemente S6 und S8 die Ladeströme I₂ und I₄ der Leistungsausgänge 42 und 44 zu. Geht man von Spannungsreglern 31, 32, 33, 34 mit einem gleichen maximalen Ladestrom von vorteilhaft 12 A aus, fließen dem Akkuschacht 23 und dem Akkuschacht 24 jeweils ein Ladestrom von 24 A zu. In den Akkuschächten 23 und 24 kann jeweils zeitgleich ein Akkupack mit 24 A geladen werden. Die Akkuschächte 21 und 22 sind während dem Ladevorgang der Akkuschächte 23 und 24 aufgrund der geöffneten Schaltelemente S1 und S2 außer Betrieb.

In Fig. 10 ist eine weitere Betriebsweise der erfindungsgemäßen Vorrichtung nach den Fig. 8 und 9 gezeigt. Fig. 10 unterscheidet sich von den Fig. 8 und 9 in den Schaltstellungen der Schaltelemente S1, S2, S3, S4, S5, S6, S7, S8 und S9 der Schaltvorrichtung 5.

Wie in Fig. 10 dargestellt, sind die Schaltelemente S2, S5, S6 und S9 geschlossen. Die Schaltelemente S1, S3, S4, S7, S8 sind in ihrer geöffneten Schaltstellung.

Das Schaltelement S1 des Akkuschachts 21 ist offen; daher ist der Akkuschacht 21 außer Betrieb.

Der Akkuschacht 22 steht über das geschlossene Schaltelement S2 mit dem Leistungsausgang 42 des Spannungsreglers 32 in Verbindung. Dem Akkuschacht 22 fließt der Ladestrom I₂ zu.

Der Akkuschacht 23 steht über das geschlossene Schaltelement S5 mit dem Leistungsausgang 43 des Spannungsreglers 33 und über das geschlossene Schaltelement S9 mit dem Leistungsausgang 41 des Spannungsreglers 31 in Verbindung. Dem Akkuschacht 23 fließt der Ladestrom I₁ + I₃ zu.

Der Akkuschacht 24 ist über das geschlossene Schaltelement 6 mit dem Spannungsregler 34 verbunden. Dem Akkuschacht fließt der Ladestrom I₄ zu.

Geht man von Spannungsreglern 31, 32, 33, 34 mit einem gleichen maximalen Ladestrom von vorteilhaft 12 A aus, fließt dem Akkuschacht 22 eine Ladestrom I₂ von 12 A zu. Dem Akkuschacht 23 fließt ein Ladestrom I₁ + I₃ von 24 A zu. Dem Akkuschacht 24 fließt ein Ladestrom I₄ von 12 A zu.

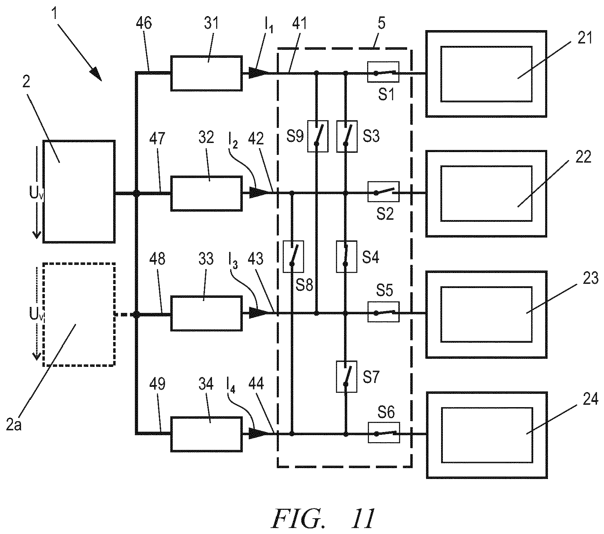

Das Ausführungsbeispiel nach Fig. 11 entspricht in seinem Aufbau und der Funktionsweise denen nach den Fig. 8 bis Fig. 10. Gleiche Teile sind mit gleichen Bezugszeichen versehen. Die Schaltelemente S1, S2, S3, S4, S5, S6, S7, S8 und S9 der Schaltvorrichtung 5 liegen im Vergleich zu den Fig. 8 bis10 in anderen Schaltstellungen. Die Schaltelemente S1, S4, S5 und S6 sind geschlossen. Die Schaltelemente S2, S3, S7, S8 und S9 liegen in ihrer geöffneten Schaltstellung.

Der Akkuschacht 21 steht über das geschlossene Schaltelement S1 mit dem Leistungsausgang 41 des Spannungsreglers 31 in Verbindung. Dem Akkuschacht 21 fließt der Ladestrom I₁ zu.

Das Schaltelement S2 des Akkuschachts 22 ist offen; daher ist der Akkuschacht 22 außer Betrieb.

Der Akkuschacht 23 steht über das geschlossene Schaltelement S5 mit dem Leistungsausgang 43 des Spannungsreglers 33 und über das geschlossene Schaltelement S4 mit dem Leistungsausgang 42 des Spannungsreglers 32 in Verbindung. Dem Akkuschacht 23 fließt der Ladestrom I₂ + I₃ zu.

Der Akkuschacht 24 ist über das geschlossene Schaltelement 6 mit dem Spannungsregler 34 verbunden. Dem Akkuschacht fließt der Ladestrom I₄ zu.

Geht man von Spannungsreglern 31, 32, 33, 34 mit einem gleichen maximalen Ladestrom von vorteilhaft 12 A aus, fließt dem Akkuschacht 21 ein Ladestrom I₂ von 12 A zu. Dem Akkuschacht 23 fließt ein Ladestrom I₂ + I₃ von 24 A zu. Dem Akkuschacht 24 fließt ein Ladestrom I₄ von 12 A zu.

Wie die verschiedenen Ausführungsbeispiele zeigen, ermöglicht der erfindungsgemäße Aufbau der Vorrichtung zum Laden eines Akkupacks eine hohe Flexibilität beim Laden von Akkupacks unterschiedlicher Kapazitäten und/oder unterschiedlicher maximaler Ladeströme. Dabei ist von Vorteil, dass die als Tiefsetzsteller ausgebildeten Spannungsregler gleiche Bauart mit gleichen Leistungsdaten aufweisen. Durch die Schaltvorrichtung 5 und die die Schaltelemente der Schaltvorrichtung 5 steuernde Steuereinheit 10, 101, 102 kann einem Akkuschacht 21, 22, 23, 24 ein insbesondere ganzzahliges Vielfach des maximalen Ladestroms eines Spannungsreglers 31, 32, 33, 34 zugeführt werden. Da die Vorrichtung 1 selbstständig den Typ und die Leistungsdaten eines in einen Akkuschacht 21, 22, 23, 24 eingeschobenen Akkupacks erkennt und auswertet, steht dem Benutzer eine Lademöglichkeit für Akkupacks unterschiedlichen Typs zur Verfügung, ohne dass er besondere Kenntnisse oder besondere Fertigkeiten bei der Verwendung von Akkupacks aufweisen muss.

## Patentansprüche

1. Vorrichtung zum Laden eines Akkupacks, bestehend aus einem ersten Akkuschacht (21) zur Aufnahme eines ersten Akkupacks und zumindest einem zweiten Akkuschacht (22) zur Aufnahme eines weiteren Akkupacks, mit einem Netzteil (2) zum Anschluss der Vorrichtung (1) an eine Netzspannung (U_{V}), und mit zumindest einem Spannungsregler (31, 32) zwischen dem Netzteil (2) und einem Akkuschacht (21, 22), wobei der Spannungsregler (31, 32) einen Leistungsausgang (41, 42) aufweist, der mit einem Akkuschacht (21, 22) verbunden und ausgebildet ist, dem Akkuschacht (21, 22) eine Ladespannung und einen Ladestrom (I₁, I₂) zur Verfügung zu stellen,
**dadurch gekennzeichnet, dass** zwischen dem Netzteil (2) und den Akkuschächten (21, 22) ein erster Spannungsregler (31) mit einem ersten Leistungsausgang (41) für einen ersten maximalen Ladestrom (I₁) und zwischen dem Netzteil (2) und den Akkuschächten (21, 22) zumindest ein zweiter Spannungsregler (32) mit einem zweiten Leistungsausgang (42) für einen zweiten maximalen Ladestrom (I₂) vorgesehen ist, und dass eine Schaltvorrichtung (5) vorgesehen ist, die ausgebildet ist, wahlweise den Leistungsausgang (41, 42) eines Spannungsreglers (31, 32) mit nur einem Akkuschacht (21, 22) zu verbinden oder die Leistungsausgänge (41, 42) von zumindest zwei Spannungsreglern (31, 32) mit nur einem Akkuschacht (21 bzw. 22) zu verbinden.

2. Vorrichtung nach Anspruch 1,
**dadurch gekennzeichnet, dass** die Schaltvorrichtung (5) mehrere Schaltelemente (S1, S2, S3, S4) umfasst.

3. Vorrichtung nach Anspruch 2,
**dadurch gekennzeichnet, dass** die Schaltvorrichtung (5) ein erstes Schaltelement (S1) aufweist, das den Leistungsausgang (41) des ersten Spannungsreglers (31) mit dem ersten Akkuschacht (21) verbindet, und die Schaltvorrichtung (5) ein zweites Schaltelement (S2) aufweist, das den Leistungsausgang (42) des zweiten Spannungsreglers (32) mit dem zweiten Akkuschacht (22) verbindet, und die Schaltvorrichtung (5) zumindest ein drittes Schaltelement (S3) aufweist, das den Leistungsausgang (41) des ersten Spannungsreglers (31) und den Leistungsausgang (42) des zweiten Spannungsreglers (32) miteinander verbindet.

4. Vorrichtung nach Anspruch 2 oder 3,
**dadurch gekennzeichnet, dass** die Schaltvorrichtung (5) mit einer Steuereinheit (10) verbunden ist, und die Steuereinheit (10) ausgebildet ist, die Schaltelemente (S1, S2, S3) der Schaltvorrichtung (5) zu betätigen.

5. Vorrichtung nach Anspruch 4,
**dadurch gekennzeichnet, dass** die Steuereinheit (10) über eine Kommunikationsverbindung (6, 7) mit den Akkuschächten (21, 22) der Vorrichtung (1) verbunden ist, und die Kommunikationsverbindung (6, 7) ausgebildet ist, die Kenndaten eines in einen Akkuschacht (21, 22) eingeschobenen Akkupacks der Steuereinheit (10) zu übermitteln.

6. Vorrichtung nach Anspruch 5,
**dadurch gekennzeichnet, dass** die Steuereinheit (10) ausgebildet ist, in Abhängigkeit der über die Kommunikationsverbindung (6, 7) empfangenen Daten eines in einen Akkuschacht (21, 22) eingeschobenen Akkupacks die Schaltelemente (S1, S2, S3) der Schaltvorrichtung (5) zu betätigen.

7. Vorrichtung nach einem der Ansprüche 1 bis 6,
**dadurch gekennzeichnet, dass** die Vorrichtung (1) mehrere Akkuschächte (21, 22, 23, 24) umfasst und jedem Akkuschacht (21, 22, 23, 24) ein Spannungsregler (31, 32, 33, 34) zugeordnet ist, dessen Leistungsausgang (41, 42, 43, 44) mit dem zugeordneten Akkuschacht (21, 22, 23, 24) über ein Schaltelement (S1, S2, S5, S7) der Schaltvorrichtung (5) verbunden ist.

8. Vorrichtung nach einem der Ansprüche 1 bis 7,
**dadurch gekennzeichnet, dass** die Leistungsausgänge (41, 42, 43, 44) von zumindest zwei Spannungsreglern (31, 32, 33, 34) über ein Schaltelement (S3, S4, S7, S8, S9) der Schaltvorrichtung (5) miteinander verbunden sind.

9. Vorrichtung nach einem der Ansprüche 1 bis 8,
**dadurch gekennzeichnet, dass** die Spannungsregler (31, 32, 33, 34) der Vorrichtung (1) gleich ausgebildet sind.

10. Vorrichtung nach einem der Ansprüche 1 bis 9,
**dadurch gekennzeichnet, dass** der maximale Ladestrom (I₁, I₂) aller Spannungsregler (31, 32, 33, 34) der Vorrichtung (5) gleich ist.

11. Vorrichtung nach einem der Ansprüche 1 bis 10,
**dadurch gekennzeichnet, dass** die Spannungsregler (31, 32, 33, 34) in elektrisch parallel zueinander liegenden Leitungszweigen (46, 47, 48, 49) angeordnet sind.

12. Vorrichtung nach einem der Ansprüche 1 bis 11,
**dadurch gekennzeichnet, dass** die Spannungsregler (31, 32, 33, 34) als Tiefsetzsteller ausgebildet sind.

## Claims

1. Device for charging a battery pack, comprising a first battery receptacle (21) for receiving a first battery pack and at least one second battery receptacle (22) for receiving a further battery pack, with a power supply unit (2) for connecting the device (1) to a mains voltage (UV), and with at least one voltage regulator (31, 32) between the power supply unit (2) and a battery receptacle (21, 22), wherein the voltage regulator (31, 32) comprises a power output (41, 42) which is connected to a battery receptacle (21, 22) and is configured to provide the battery receptacle (21, 22) with a charging voltage and a charging current (11, 12),
**characterized in that** a first voltage regulator (31) having a first power output (41) for a first maximum charging current (I1) is provided between the power supply unit (2) and the battery receptacles (21, 22), and at least one second voltage regulator (32) having a second power output (42) for a second maximum charging current (12) is provided between the power supply unit (2) and the battery receptacles (21, 22), and **in that** a switching device (5) is provided which is configured selectively to connect the power output (41, 42) of one voltage regulator (31, 32) to only one battery receptacle (21, 22) or to connect the power outputs (41, 42) of at least two voltage regulators (31, 32) to only one battery receptacle (21 or 22).

2. Device according to claim 1,
**characterized in that** the switching device (5) comprises a plurality of switching elements (S1, S2, S3, S4).

3. Device according to claim 2,
**characterized in that** the switching device (5) comprises a first switching element (S1) which connects the power output (41) of the first voltage regulator (31) to the first battery receptacle (21), and the switching device (5) comprises a second switching element (S2) which connects the power output (42) of the second voltage regulator (32) to the second battery receptacle (22), and the switching device (5) comprises at least one third switching element (S3) which connects the power output (41) of the first voltage regulator (31) and the power output (42) of the second voltage regulator (32) to one another.

4. Device according to claim 2 or 3,
**characterized in that** the switching device (5) is connected to a control unit (10), and the control unit (10) is configured to actuate the switching elements (S1, S2, S3) of the switching device (5).

5. Device according to claim 4,
**characterized in that** the control unit (10) is connected to the battery receptacles (21, 22) of the device (1) via a communication connection (6, 7), and the communication connection (6, 7) is configured to transmit the characteristic data of a battery pack inserted into a battery receptacle (21, 22) to the control unit (10).

6. Device according to claim 5,
**characterized in that** the control unit (10) is configured to actuate the switching elements (S1, S2, S3) of the switching device (5) as a function of the data of a battery pack inserted into a battery receptacle (21, 22) received via the communication connection (6, 7).

7. Device according to one of claims 1 to 6,
**characterized in that** the device (1) comprises a plurality of battery receptacles (21, 22, 23, 24) and a voltage regulator (31, 32, 33, 34) is assigned to each battery receptacle (21, 22, 23, 24), the power output (41, 42, 43, 44) of said voltage regulator being connected to the assigned battery receptacle (21, 22, 23, 24) via a switching element (S1, S2, S5, S7) of the switching device (5).

8. Device according to one of claims 1 to 7,
**characterized in that** the power outputs (41, 42, 43, 44) of at least two voltage regulators (31, 32, 33, 34) are connected to one another via a switching element (S3, S4, S7, S8, S9) of the switching device (5).

9. Device according to one of claims 1 to 8,
**characterized in that** the voltage regulators (31, 32, 33, 34) of the device (1) are of identical design.

10. Device according to one of claims 1 to 9,
**characterized in that** the maximum charging current (I1, I2) of all voltage regulators (31, 32, 33, 34) of the device (5) is identical.

11. Device according to one of claims 1 to 10,
**characterized in that** the voltage regulators (31, 32, 33, 34) are arranged in line branches (46, 47, 48, 49) electrically connected in parallel to one another.

12. Device according to one of claims 1 to 11,
**characterized in that** the voltage regulators (31, 32, 33, 34) are configured as buck converters.

## Revendications

1. Dispositif pour charger un bloc-batterie, comprenant un premier logement de batterie (21) destiné à recevoir un premier bloc-batterie et au moins un deuxième logement de batterie (22) destiné à recevoir un autre bloc-batterie, avec une alimentation électrique (2) destinée au raccordement du dispositif (1) à une tension de réseau (UV), et avec au moins un régulateur de tension (31, 32) entre l'alimentation électrique (2) et un logement de batterie (21, 22), le régulateur de tension (31, 32) comportant une sortie de puissance (41, 42) qui est reliée à un logement de batterie (21, 22) et est configurée pour mettre à disposition du logement de batterie (21, 22) une tension de charge et un courant de charge (I1, I2),
**caractérisé en ce qu'**entre l'alimentation électrique (2) et les logements de batterie (21, 22) est prévu un premier régulateur de tension (31) comportant une première sortie de puissance (41) pour un premier courant de charge maximal (11), et qu'entre l'alimentation électrique (2) et les logements de batterie (21, 22) est prévu au moins un deuxième régulateur de tension (32) comportant une deuxième sortie de puissance (42) pour un deuxième courant de charge maximal (12), et **en ce qu'**est prévu un dispositif de commutation (5) qui est configuré pour relier sélectivement la sortie de puissance (41, 42) d'un régulateur de tension (31, 32) à un seul logement de batterie (21, 22) ou pour relier les sorties de puissance (41, 42) d'au moins deux régulateurs de tension (31, 32) à un seul logement de batterie (21 ou 22).

2. Dispositif selon la revendication 1,
**caractérisé en ce que** le dispositif de commutation (5) comprend plusieurs éléments de commutation (S1, S2, S3, S4).

3. Dispositif selon la revendication 2,
**caractérisé en ce que** le dispositif de commutation (5) comporte un premier élément de commutation (S1) qui relie la sortie de puissance (41) du premier régulateur de tension (31) au premier logement de batterie (21), et le dispositif de commutation (5) comporte un deuxième élément de commutation (S2) qui relie la sortie de puissance (42) du deuxième régulateur de tension (32) au deuxième logement de batterie (22), et le dispositif de commutation (5) comporte au moins un troisième élément de commutation (S3) qui relie entre elles la sortie de puissance (41) du premier régulateur de tension (31) et la sortie de puissance (42) du deuxième régulateur de tension (32).

4. Dispositif selon la revendication 2 ou 3,
**caractérisé en ce que** le dispositif de commutation (5) est relié à une unité de commande (10), et l'unité de commande (10) est configurée pour actionner les éléments de commutation (S1, S2, S3) du dispositif de commutation (5).

5. Dispositif selon la revendication 4,
**caractérisé en ce que** l'unité de commande (10) est reliée, par l'intermédiaire d'une liaison de communication (6, 7), aux logements de batterie (21, 22) du dispositif (1), et la liaison de communication (6, 7) est configurée pour transmettre à l'unité de commande (10) les données caractéristiques d'un bloc-batterie inséré dans un logement de batterie (21, 22).

6. Dispositif selon la revendication 5,
**caractérisé en ce que** l'unité de commande (10) est configurée pour actionner les éléments de commutation (S1, S2, S3) du dispositif de commutation (5) en fonction des données d'un bloc-batterie inséré dans un logement de batterie (21, 22), reçues via la liaison de communication (6, 7).

7. Dispositif selon l'une des revendications 1 à 6,
**caractérisé en ce que** le dispositif (1) comprend plusieurs logements de batterie (21, 22, 23, 24) et qu'un régulateur de tension (31, 32, 33, 34) est associé à chaque logement de batterie (21, 22, 23, 24), dont la sortie de puissance (41, 42, 43, 44) est reliée au logement de batterie associé (21, 22, 23, 24) par l'intermédiaire d'un élément de commutation (S1, S2, S5, S7) du dispositif de commutation (5).

8. Dispositif selon l'une des revendications 1 à 7,
**caractérisé en ce que** les sorties de puissance (41, 42, 43, 44) d'au moins deux régulateurs de tension (31, 32, 33, 34) sont reliées entre elles par l'intermédiaire d'un élément de commutation (S3, S4, S7, S8, S9) du dispositif de commutation (5).

9. Dispositif selon l'une des revendications 1 à 8,
**caractérisé en ce que** les régulateurs de tension (31, 32, 33, 34) du dispositif (1) sont réalisés de manière identique.

10. Dispositif selon l'une des revendications 1 à 9,
**caractérisé en ce que** le courant de charge maximal (I1, I2) de tous les régulateurs de tension (31, 32, 33, 34) du dispositif (5) est identique.

11. Dispositif selon l'une des revendications 1 à 10,
**caractérisé en ce que** les régulateurs de tension (31, 32, 33, 34) sont disposés dans des branches de ligne (46, 47, 48, 49) électriquement parallèles les unes aux autres.

12. Dispositif selon l'une des revendications 1 à 11,
**caractérisé en ce que** les régulateurs de tension (31, 32, 33, 34) sont configurés en tant qu'abaisseurs de tension.
